# EUROPEAN PATENT SPECIFICATION

(11) **EP 2 494 163 B1**
(45) Date of publication and mention of the grant of the patent: **04.07.2018**
(21) Application number: 10749998.0
(22) Date of filing: 30.08.2010
(51) Int. Cl.: F02C 1/00, F02C 7/10, F17C 1/00, F28D 17/02

(54) **REINFORCED THERMAL ENERGY STORAGE PRESSURE VESSEL FOR AN ADIABATIC COMPRESSED AIR ENERGY STORAGE SYSTEM**
BEWEHRTER DRUCKBEHÄLTER ZUR WÄRMEENERGIESPEICHERUNG FÜR EIN ADIABATISCHES DRUCKLUFTSPEICHERKRAFTWERK
CUVE À PRESSION RENFORCÉE DESTINÉE AU STOCKAGE D'ÉNERGIE THERMIQUE POUR UN SYSTÈME DE STOCKAGE ADIABATIQUE D'ÉNERGIE D'AIR COMPRIMÉ

(30) Priority: 29.10.2009 US 608087
(43) Date of publication of application: 05.09.2012
(73) Proprietor: General Electric Company, Schenectady, NY 12345 (US)
(72) Inventor: FREUND, Sebastian, W., 85748 Garching b. Muenchen (DE); FINKENRATH, Matthias, 85748 Garching b. Muenchen (DE); BOTERO, Cristina, Cambridge, MA 02139 (US); BELLONI, Clarissa, S.k., 85748 Garching b. Muenchen (DE); GONZALEZ SALAZAR, Miguel, Angel, 85748 Garching b. Muenchen (DE); HOFFMANN, Stephanie, Marie-Noelle, 80339 Muenchen (DE)
(74) Representative: Illingworth-Law, William Illingworth
(86) International application number: PCT/US2010/047076
(87) International publication number: WO 2011/053402

(56) References cited:
- DE-C- 245 839
- US-A- 1 817 226
- US-A- 3 677 008
- US-A- 4 147 204
- US-A- 4 885 912

## Description

### BACKGROUND OF THE INVENTION

Embodiments of the invention relate generally to compressed air energy storage (CAES) systems and, more particularly, to thermal energy storage (TES) pressure vessels in an adiabatic CAES system.

US-A-4 147 204 discloses a compressed air storage installation comprising a subterranean heat accumulator.

CAES systems allow the generation of electricity without producing substantial emissions and/or consuming vast quantities of natural resources. CAES systems typically include a compression train having one or more compressors. The one or more compressors compress intake air in a compression stage for storage in a cavern, porous rock formation, depleted natural gas/oil field, or other compressed air storage component. The compressed air is then later used to drive turbines to produce electrical energy in an energy generation stage, which can in turn be provided to the utility grid. Often, if utility energy is used to power the compression train during the compression stage, the compression train operates during the off-peak hours of utility plants. The energy generation stage of the CAES in turn typically operates during high energy demand times. Alternatively, energy from renewable sources, such as energy from wind mills or solar panel arrays, may be used to power the compression train during the compression stage to compress and deliver air to the compressed air storage location (e.g., a cavern). In this way, the compression train may be operated during times other than off-peak hours, and existing utility energy may be preserved.

One type of CAES system is known as a diabatic-CAES system. In a diabatic-CAES system, heat generated by the compression train is typically lost to the ambient environment. That is, the heat of compression may be largely present when entering the cavern or other compressed air storage component, but its energetic value and availability is diminished as the compressed air mixes with the cavern air and further cools to ambient temperature during storage. Thus, when the compressed air stored in the cavern or compressed air storage component is to be used to drive one or more turbines to produce electrical energy, the compressed air is typically reheated prior to entering the turbines. This reheating step is typically performed using a natural gas-fired recuperator positioned between the compressed air storage component and the one or more turbines. Due to this reheating step, the overall efficiency of the diabatic-CAES system is reduced, and the use of natural gas to fuel the recuperator leads to carbon emissions and natural resource consumption.

Adiabatic-CAES, or ACAES, systems are capable of improving system efficiency by capturing and storing the heat of compression for later use. In such a system, one or more thermal energy storage (TES) units are positioned between the compressor and the cavern. Typically, a TES unit contains therein a medium for heat storage, such as concrete, stone, a fluid (e.g., oil), a molten salt, or a phase-change material. Hot air from the compression stage is passed through the TES unit, thereby transferring its heat of compression to the medium in the process. Thus, unlike diabatic-CAES systems, ACAES systems do not lose all of the heat generated by the compression train, but instead store some of the heat within the TES unit or units. The compressed air then enters the cavern at or near ambient temperature.

When the compressed air stored within the cavern or other compressed air storage unit is to be withdrawn to drive the one or more turbines to produce electrical energy, the compressed air passes back through the TES unit, thereby reheating the compressed air prior to entry into the turbine or turbines. In this way, ACAES systems do not necessitate additional natural gas-fired recuperation to reheat the compressed air exiting the cavern or other compressed air storage component. Thus, ACAES systems provide improved efficiency over diabatic-CAES systems, with fewer (if any) carbon emissions and little to no natural resource consumption.

TES units built to effectively store heat generated during the compression cycle of the compression train are constructed to withstand the high heat fluctuations and high pressure associated with ACAES systems. For example, the compressed air temperature exiting the compression train may vary from 250° C to 750° C, while the temperature of the compressed air entering the TES unit from the cavern is at or near ambient temperature. Likewise, the TES units are designed to withstand pressures of 65-85 bar. To withstand such high temperatures and pressures, current proposals for TES units involve the construction of large concrete cylinders filled with a medium for heat storage. Due to their large diameter, these TES units are formed having thick, prestressed and steel-reinforced concrete walls, which enable the TES unit to withstand the high tension forces in the wall created by the pressure therein. However, construction of such thick concrete walls leads to substantial engineering difficulties and high costs, thereby reducing the feasibility of implementing an ACAES system as opposed to a less efficient diabatic-CAES system. Furthermore, high operating temperatures and temperature cycles induce damaging thermal stresses into the concrete walls, and these stresses are amplified as the concrete walls grow thicker.

Therefore, it would be desirable to design an apparatus and method that overcomes the aforementioned drawbacks related to TES unit construction.

### BRIEF DESCRIPTION OF THE INVENTION

The present invention is defined in the accompanying claims.

Aspects of the invention provide a system and method for a TES unit having at least one reinforced structure affixed thereto to allow the TES unit to withstand both high pressures and high temperatures. The at least one reinforced structure enables the wall of the TES unit to have a minimal thickness.

In accordance with one aspect of the invention, a thermal energy storage system is disclosed according to independent claim 1.

In accordance with another aspect of the invention, a method of forming a thermal energy storage pressure vessel is disclosed according to independent claim 11. the height of the wall, and disposing a porous thermal storage medium within the interior volume.

Various other features and advantages will be made apparent from the following detailed description and the drawings.

### BRIEF DESCRIPTION OF THE DRAWINGS

The drawings illustrate preferred embodiments presently contemplated for carrying out the invention.

In the drawings:
FIG. 1 is a schematic arrangement of an ACAES system according to an embodiment of the present invention.
FIG. 2 is a side view of a TES unit in accordance with an embodiment of the present invention.
FIG. 3 is a cross-sectional view of the TES unit of FIG. 2 in accordance with an embodiment of the present invention.
FIG. 4 is a side view of a TES unit in accordance with an example, not forming part of the present invention.
FIG. 5 is a cross-sectional view of the TES unit of FIG. 4 in accordance with an example not forming part of the present invention.
FIG. 6 is a cross-sectional view of a TES unit in accordance with yet another embodiment of the present invention.

### DETAILED DESCRIPTION

According to embodiments of the invention, a system is provided that comprises a TES unit having at least one reinforced structure affixed thereto to allow the TES unit to withstand high pressure and temperature fluctuations.

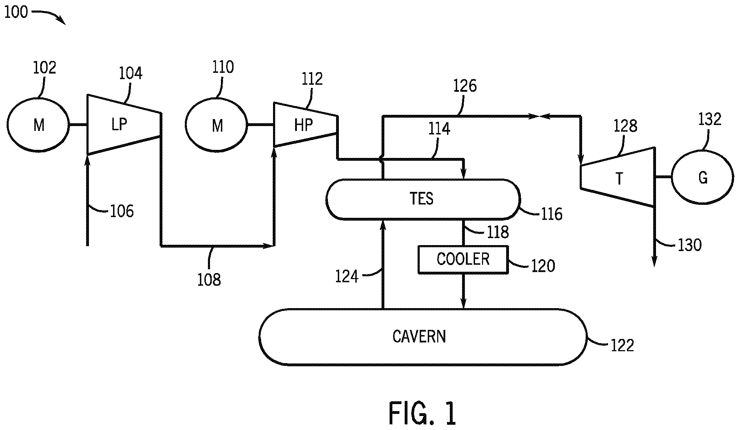

First, referring to FIG. 1, a schematic arrangement of the primary elements of a conventional ACAES system is shown. ACAES system 100 comprises an electric motor 102 coupled to a low-pressure compressor 104. Electric motor 102 may be electrically powered via conventional means, i.e., the utility grid, during off-peak utility hours. Alternatively, electric motor 102 may be powered by electricity provided via wind farms, solar arrays, or other renewable sources. Electric motor 102 powers low-pressure compressor 104 such that low-pressure compressor 104 pressurizes intake air 106. Pressurized air 108 from low-pressure compressor 104 is then provided to a high-pressure compressor 112 to enable the air to undergo further compression. Similar to low-pressure compressor 104, high-pressure compressor 112 is powered by an electric motor 110. Electric motor 110 may also be powered by the utility grid or by renewable sources such as wind farms and solar arrays. While ACAES system 100 shows the use of two compressors in a "compression train", it is to be understood that more or fewer compressors could be used.

As the air passes through respective low-pressure compressor 104 and high-pressure compressor 112, the air is pressurized to a level of 65-85 bar and subsequently heated to a temperature of up to 650° C. This pressurized, heated air 114 then enters a thermal energy storage (TES) unit 116. TES unit 116 typically includes a porous thermal storage medium disposed therein, the porous thermal storage medium capable of retaining a substantial amount of the heat emitted by air 114 as it passes through TES unit 116. The porous thermal storage medium may be a variety of solid materials, such as natural stone, ceramics, concrete, cast iron, or a combination of ceramics and salt. Alternatively, the porous thermal storage medium may be a liquid material, such as a combination of nitrate salt and mineral oil.

After heated air 114 passes through TES unit 116, compressed air 118 exits TES unit 116 at a lowered temperature to enable compressed air 118 to be stored in a cavern 122 or other compressed air storage component. Prior to entering cavern 122, though, compressed air 118 may need to be further cooled by an optional intercooler 120 such that compressed air 118 enters cavern 122 at a maximum temperature of approximately 50° C, for example. Cavern 122 enables air pressurized to a level of about 60-80 bar to be stored for an extended period of time without significant compression losses.

Referring still to FIG. 1, compressed air 124 may be discharged from cavern 122 when use of the stored air is desired for the generation of electricity. Compressed air 124 exits cavern 122 and re-enters TES unit 116 at a temperature of approximately 20-50° C. As the compressed air passes through the porous thermal storage medium of TES unit 116, it is reheated to a temperature of up to 600° C, a temperature near that of heated air 114 previously discharged from high-pressure compressor 112. This reheated compressed air 126, which at this stage is pressurized to a level of about 55-75 bars, then enters a steam turbine 128, which is powered by reheated compressed air 126. Unlike diabatic-CAES systems, compressed air 126 has been reheated within TES unit 116, and thus there is no need for additional heat recuperation or gas firing at the steam turbine to reheat the compressed air. As steam turbine 128 operates, exhaust air 130 is discharged therefrom, and steam turbine 128 powers an electrical generator 132. Electrical energy generated by generator 132 may then be provided to the utility grid for consumption. As can readily appreciated, ACAES system 100 represents a method of generating electricity that can greatly reduce, if not eliminate, natural resource consumption and/or carbon emissions in the production of electrical energy.

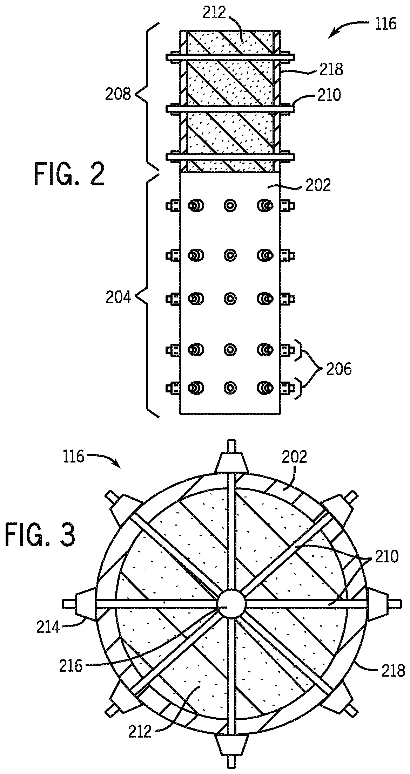

As discussed above with respect to FIG. 1, TES unit 116 may be subjected to significant pressures (65-85 bar) and temperatures (up to 650° C) during operation of ACAES system 100. As a result, TES unit 116 is constructed to withstand such high pressure and temperature levels. Referring to FIGS. 2 and 3, TES unit 116 according to an embodiment of the invention is shown. FIG. 2 illustrates a side view of TES unit 116. TES unit 116 is illustrated as a cylindrical pressure vessel having a wall 202 of a predetermined length and thickness. TES unit 116, however, is not limited to cylindrical shapes, and may be of any suitable shape. Wall 202 is generally formed of concrete, but may be constructed using any material of suitable strength and rigidity, such as steel. Cross section 204 of TES unit 116 further shows that a plurality of reinforcement structures 206 are affixed to an outer surface 218 of wall 202 along a length of TES unit 116. While a plurality of reinforcement structures 206 is shown, it is to be understood that embodiments of the invention are not limited to the number and placement of the reinforcement structures 206 shown.

FIG. 2 further shows a cut-away cross section 208 of TES unit 116. As can be seen by cut-away cross section 208, each reinforcement structure 206 comprises at least one rod 210 passing entirely through an interior volume 212 and wall 202. Interior volume 212 contains therein a porous thermal storage medium, such as natural stone or a ceramic material, which is designed to absorb and retain heat from the compressed air passing through TES unit 116, as described above. Each rod 210 is affixed to an outer surface of wall 202, thereby providing structural reinforcement within TES unit 116.

Referring now to FIG. 3, a cross-sectional view of TES unit 116 according to an embodiment of the invention is shown. As can be seen in FIG. 3, a plurality of rods 210 are configured to pass through both wall 202 and interior volume 212, forming a spoke-shaped framework within interior volume 212. Rods 210 are preferably made of steel, but may be made of any suitable material capable of withstanding high pressures and temperatures. Rods 210 are fixedly attached to the outer surface 218 of wall 202 by anchors 214. Anchors 214 may be affixed to the outer surface 218 of wall 202 by any appropriate means, e.g., through bolting or welding. Rods 210 are also coupled at a common centerpoint hub 216 located within interior volume 212. Preferably, rods 210 are of a sufficient length to pass entirely through wall 202 on opposite sides thereof and through interior volume 212 and centerpoint hub 216 to be affixed to two opposing anchors 214. For example, as shown in FIG. 3, a reinforcement structure 206 has four rods 210 interconnected by centerpoint hub 216. Each rod 210 is attached to outer surface 218 of wall 202 via a pair of respective anchors 214 attached to opposite sides of wall 202.

The rods are configured to pass through wall 202 and extend toward centerpoint hub 216. In this manner, one end of each rod 210 is retained by a respective anchor 214, while the other end is retained by or coupled to centerpoint hub 216.

It is to be understood that the configuration shown in FIG. 3 is merely exemplary and that while four or eight rods 210 are shown as described above, embodiments of the invention include using more or fewer rods 210 and anchors 214 in each reinforcement structure 206.

By reinforcing TES unit 116 in the fashion shown by FIGS. 2 and 3, wall stresses caused by high air pressure within wall 202 can be substantially relieved. As a result, wall 202 can be constructed with a reduced overall thickness, as reinforcement structures 206 act to relieve stress on wall 202 that was previously addressed through increased wall thickness. With such reduced wall thickness, TES unit 116 will also not be subject to the substantial thermal stresses present in pressure vessels having thick walls. Furthermore, TES unit 116 is easier and less expensive to both construct and transport over conventional TES units. As such, embodiments of the invention allow for construction and adoption of ACAES systems as viable alternatives for producing electrical energy.

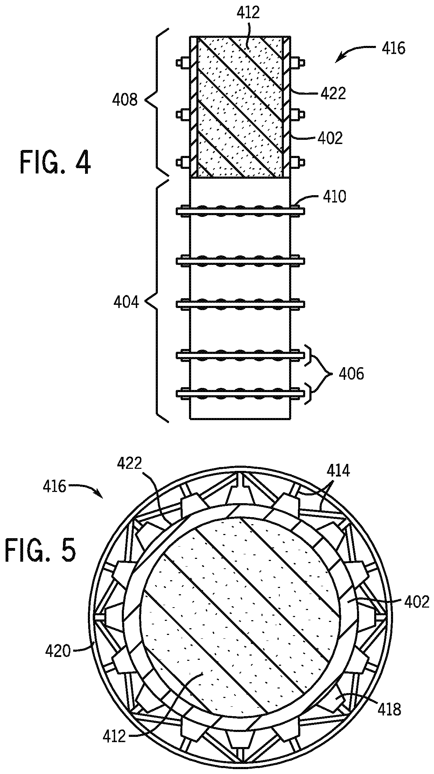

Referring now to FIGS. 4 and 5, another example, not forming part of the present invention, is shown. FIG. 4 illustrates a side view of a TES unit 416 comprising a wall 402 having a predetermined length and thickness. While TES unit 416 is shown to be cylindrical, it is not limited as such, and may be of any suitable shape. Wall 402 is generally formed of concrete, but may be constructed using any material of suitable strength and rigidity, such as steel. Cross section 404 of TES unit 416 shows a plurality of reinforcement structures 406 affixed about an outer surface of wall 402 along a length of TES unit 416. While FIG. 4 shows a plurality of reinforcement structures 406 affixed along TES unit 416, the number and placement of reinforcement structures 406 is not limited to that shown, as it is possible one or more reinforcement structures 406 affixed to wall 402 according to embodiments of the present invention.

FIG. 4 further shows a cut-away cross section 408 of TES unit 416. Unlike reinforcement structures 206 described above with respect to FIG. 2, reinforcement structures 406 do not pass through an interior volume 412 of TES unit 416. Instead, reinforcement structures 406 comprise a trussed framework 410 that is affixed along an exterior surface 422 of wall 402. As such, each trussed framework 410 provides structural reinforcement along exterior surface 422 of wall 402 of TES unit 416. Interior volume 412, like interior volume 212 described above with respect to FIGS. 2 and 3, contains a porous thermal storage medium therein, which is designed to retain heat from the compressed air passing through TES unit 416.

FIG. 5 illustrates a cross-sectional view of TES unit 416. As can be seen in FIG. 5, trussed framework 410 comprises a plurality of rods 414 affixed to a plurality of anchors 418, the plurality of rods 414 being further affixed to and bounded by a rim 420. Anchors 418 may be affixed to wall 402 through any known means, such as by bolt or by weld. Rods 414 and rim 420 may be made of steel, but are not limited as such, and may be made of any suitable material. Rods 414 are arranged between anchors 418 and rim 420 to form the trussed framework about the external surface of wall 402. It is to be appreciated that the precise number of rods 414 and anchors 418 used is not imperative to the invention, but the number of rods 414 and anchors 418 utilized should be of an amount sufficient to allow the trussed framework to pressurize wall 402.

Using the trussed framework 410 as described above with respect to the embodiment shown in FIGS. 4 and 5, wall stresses caused by high air pressure within wall 402 can be substantially relieved, thereby allowing wall 402 to have a thickness substantially less than that of conventional TES units. Reduced wall thickness acts to mitigate the substantial thermal stresses present in pressure vessels, thermal stresses that become more prevalent as the walls become thicker. As an additional benefit, TES unit 416 may be both easier and less expensive to construct and transport than conventional TES units.

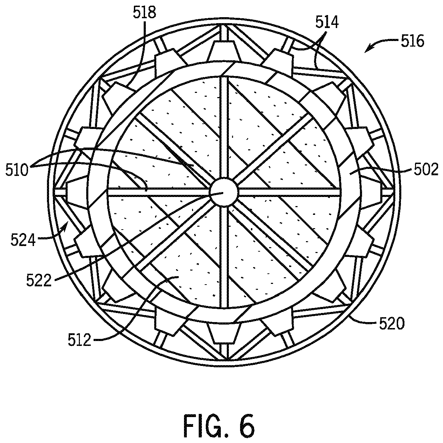

Next, FIG. 6 illustrates yet another embodiment of the present invention. FIG. 6 is a cross-sectional view of TES unit 516, which combines the concepts of the spoke-shaped reinforcement structure of TES unit 116 shown in FIGS. 2, 3 with the external trussed framework of TES unit 416 shown in FIGS. 4, 5. In particular, TES unit 516 comprises a plurality of rods 510 configured to pass through both a wall 502 and an interior volume 512, forming a spoke-shaped framework within interior volume 512. Rods 510 are fixedly attached to the outer surface of wall 502 by anchors 518 and are coupled at a common centerpoint hub 522 located within interior volume 512. TES unit 516 further includes a trussed framework 524 disposed about an outside surface of wall 502. The trussed framework 524 comprises a plurality of rods 514 affixed to the anchors 518, the plurality of rods 414 being further affixed to and bounded by a rim 520. Rods 514 are arranged between anchors 518 and rim 520 to form the trussed framework about the outside surface of wall 502.

As can be readily appreciated, the combination of the spoke-shaped reinforcement structure and the external trussed framework shown in FIG. 6 provides wall 502 with substantial protection from pressure-related stresses using walls that are thinner than walls of conventional TES units. Accordingly, TES unit 516, like TES unit 116 and TES unit 416 described above, can be constructed to have thinner walls than conventional TES units, thereby reducing the cost and complexity of constructing the TES unit, and further reducing the likelihood of thermal stresses being suffered throughout regular operation of the ACAES system.

Therefore, according to one embodiment of the invention, a thermal energy storage system is disclosed, the thermal energy storage system comprising a pressure vessel configured to withstand a first pressure, wherein the pressure vessel has a wall comprising an outer surface and an inner surface surrounding an interior volume of the pressure vessel. The interior volume of the pressure vessel has a first end in fluid communication with one or more compressors and one or more turbines, and a second end in fluid communication with at least one compressed air storage component. A thermal storage medium is positioned in the interior volume, and at least one reinforcement structure is affixed to the outer surface of the wall, wherein the at least one reinforcement structure configured to reinforce the wall to withstand a second pressure greater than the first pressure.

According to another example, not forming part of the present invention, a method of forming a thermal energy storage pressure vessel is described. The method comprises forming a wall having a predetermined height and thickness, wherein an inner surface of the wall bounds an interior volume therein. The method further comprises affixing a reinforcement structure to a surface of the wall at a first location, affixing at least one additional reinforcement structure to a surface of the wall at another location along the height of the wall, and disposing a porous thermal storage medium within the interior volume.

According to yet another example, not forming part of the present invention, a thermal energy storage pressure vessel is disclosed, the thermal energy storage pressure vessel comprising a concrete cylindrical wall bounding an interior volume, wherein the interior volume is configured to allow air passage therethrough, and at least one reinforcing structure affixed to an outer surface of the concrete cylindrical wall. The thermal energy storage pressure vessel further comprises a porous thermal matrix material disposed within the interior volume of the concrete cylindrical wall, wherein the porous thermal matrix material is configured to allow air passage therethrough.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the subject matter of the claims if they have structural elements that do not differ from the literal language of the claims, or if they include equivalent structural elements with insubstantial differences from the literal languages of the claims.

## Claims

1. A thermal energy storage system comprising:
a cylindrical pressure vessel (116) configured to withstand a first pressure, the pressure vessel having a wall (202) comprising:
an outer surface; and
an inner surface surrounding an interior volume (212) of the pressure vessel, the interior volume having:
a first end able to communicate fluidly with one or more compressors and one or more turbines; and
a second end able to communicate fluidly with at least one compressed air storage component;
a thermal storage medium positioned in the interior volume; and
at least one reinforcement structure (206) affixed to the outer surface of the wall and extending into the interior volume of the pressure vessel; the at least one reinforcement structure (206) configured to reinforce the wall (202) to withstand pressure greater than the first pressure;
wherein the at least one reinforcement structure (206) comprises a plurality of steel rods (210) forming a spoke-shaped framework within the interior volume of the pressure vessel, each of the rods (210) is retained by a respective anchor (214) on an outside surface of the wall (202), while the other end passes through the wall (202) and coupled at a common centerpoint hub (216) located within interior volume (212).

2. The thermal energy storage system of claim 1 wherein the at least one reinforcement structure comprises a plurality of steel rods (210) interconnected to form a trussed framework about the outer surface of the wall (202).

3. The thermal energy storage system of claim 2 further comprising a steel rim (520) disposed about an outer circumference of the trussed framework.

4. The thermal energy storage system of claim 1 wherein the at least one reinforcement structure comprises:
a plurality of first rods (514) interconnected between a plurality of wall-mounted anchors and a circumferential rim (520) to form a trussed framework about the outer surface of the wall.

5. The thermal energy storage system of claim 1 wherein the at least one reinforcement structure comprises a plurality of reinforcement structures disposed along a length of the pressure vessel.

6. The thermal energy storage system of claim 1 wherein the wall (202) of the pressure vessel is formed of concrete.

7. The thermal energy storage system of claim 1 wherein the thermal storage medium is a porous thermal storage medium disposed within the interior volume of the pressure vessel.

8. The thermal energy storage system of claim 7, wherein the porous thermal storage medium comprises at least one of natural stone, ceramic, concrete, cast iron, nitrate salt, and mineral oil.

9. The thermal energy storage system of claim 1 wherein the pressure vessel (116) is cylindrical in shape.

10. The thermal energy storage system of claim 1, wherein:
the wall (202) is a concrete cylindrical wall bounding the interior volume, wherein the interior volume is configured to allow air passage therethrough;
the least one reinforcing structure (206) is affixed to the outer surface of the concrete cylindrical wall; and
a porous thermal matrix material is disposed within the interior volume of the concrete cylindrical wall, wherein the porous thermal matrix material is configured to allow air passage therethrough.

11. A method of forming a thermal energy storage pressure vessel according to any preceding claim, the method comprising:
forming a wall (202) having a predetermined height and thickness, wherein an inner surface of the wall bounds an interior volume (212) therein;
affixing a reinforcement structure (206) extending into the interior volume to a surface of the wall at a first location, comprising:
affixing a plurality of anchors (214) to an outside surface of the wall; and
affixing a plurality of rods (210) to the plurality of anchors, the plurality of rods passing through the wall to form a spoke-shaped framework within the interior volume, each of the rods (210) being coupled at a common centerpoint hub 216 located within interior volume 212;
affixing at least one additional reinforcement structure to a surface of the wall at another location along the height of the wall; and
disposing a porous thermal storage medium within the interior volume (212).

12. The method of claim 11 wherein the affixing of a reinforcement structure to the surface of the wall comprises:
affixing a plurality of anchors (518) to an outside surface of the wall;
attaching a plurality of rods (510) to the anchors at a first end of the rods; and
attaching the plurality of rods to a rim (520) at a second end of the rods such that the plurality of anchors, the plurality of rods, and the rim form a trussed framework about an outside surface of the wall.

## Patentansprüche

1. Wärmeenergiespeichersystem, umfassend:
einen zylindrischen Druckbehälter (116), der dazu konfiguriert ist, einem ersten Druck zu widerstehen, wobei der Druckbehälter eine Wand (202) aufweist, umfassend:
eine äußere Oberfläche; und
eine innere Oberfläche, die ein inneres Volumen (212) des Druckbehälters umgibt, wobei das innere Volumen Folgendes aufweist:
ein erstes Ende, das mit einem oder mehreren Kompressoren und einer oder mehreren Turbinen fluidisch kommunizieren kann; und
ein zweites Ende, das mit mindestens einer Druckluftspeicherkomponente fluidisch kommunizieren kann;
ein Wärmespeichermedium, das in dem inneren Volumen positioniert ist; und
mindestens eine Verstärkungsstruktur (206), die an der äußeren Oberfläche der Wand befestigt ist und sich in das innere Volumen des Druckbehälters erstreckt; wobei die mindestens eine Verstärkungsstruktur (206) dazu konfiguriert ist, die Wand (202) zu verstärken, um einem Druck zu widerstehen, der größer als der erste Druck ist;
wobei die mindestens eine Verstärkungsstruktur (206) eine Vielzahl von Stahlstäben (210) umfasst, die einen speichenförmigen Rahmen innerhalb des inneren Volumens des Druckbehälters bilden, wobei jeder der Stäbe (210) von einem jeweiligen Anker (214) an einer äußeren Oberfläche der Wand (202) gehalten wird, während das andere Ende durch die Wand (202) verläuft und an eine gemeinsame Mittelpunktsnabe (216) gekoppelt ist, die innerhalb des inneren Volumens (212) angeordnet ist.

2. Wärmeenergiespeichersystem nach Anspruch 1, wobei die mindestens eine Verstärkungsstruktur eine Vielzahl von Stahlstäben (210) umfasst, die miteinander verbunden sind, um einen versteiften Rahmen um die äußere Oberfläche der Wand (202) herum zu bilden.

3. Wärmeenergiespeichersystem nach Anspruch 2, weiter umfassend einen Stahlkranz (520), der um einen äußeren Umfang des versteiften Rahmens herum angeordnet ist.

4. Wärmeenergiespeichersystem nach Anspruch 1, wobei die mindestens eine Verstärkungsstruktur Folgendes umfasst:
eine Vielzahl von ersten Stäben (514), die zwischen einer Vielzahl von wandmontierten Ankern und einem Umfangskranz (520) miteinander verbunden sind, um einen versteiften Rahmen um die äußere Oberfläche der Wand herum zu bilden.

5. Wärmeenergiespeichersystem nach Anspruch 1, wobei die mindestens eine Verstärkungsstruktur eine Vielzahl von Verstärkungsstrukturen umfasst, die entlang einer Länge des Druckbehälters angeordnet sind.

6. Wärmeenergiespeichersystem nach Anspruch 1, wobei die Wand (202) des Druckbehälters aus Beton hergestellt ist.

7. Wärmeenergiespeichersystem nach Anspruch 1, wobei das Wärmespeichermedium ein poröses Wärmespeichermedium ist, das innerhalb des inneren Volumens des Druckbehälters angeordnet ist.

8. Wärmeenergiespeichersystem nach Anspruch 7, wobei das poröse Wärmespeichermedium mindestens eines von Naturstein, Keramik, Beton, Gusseisen, Nitratsalz und Mineralöl umfasst.

9. Wärmeenergiespeichersystem nach Anspruch 1, wobei der Druckbehälter (116) eine zylindrische Form hat.

10. Wärmeenergiespeichersystem nach Anspruch 1, wobei:
die Wand (202) eine zylindrische Betonwand ist, die das innere Volumen begrenzt, wobei das innere Volumen dazu konfiguriert ist, Luft dort hindurchzulassen;
die mindestens eine Verstärkungsstruktur (206) an der äußeren Oberfläche der zylindrischen Betonwand befestigt ist; und
ein poröses thermisches Matrixmaterial innerhalb des inneren Volumens der zylindrischen Betonwand angeordnet ist, wobei das poröse thermische Matrixmaterial dazu konfiguriert ist, Luft dort hindurchzulassen.

11. Verfahren zum Herstellen eines Wärmeenergiespeicher-Druckbehälters nach einem der vorstehenden Ansprüche, wobei das Verfahren Folgendes umfasst:
Herstellen einer Wand (202), die eine vorbestimmte Höhe und Dicke aufweist, wobei eine innere Oberfläche der Wand ein inneres Volumen (212) darin begrenzt;
Befestigen einer Verstärkungsstruktur (206), die sich in das innere Volumen erstreckt, an einer Oberfläche der Wand an einer ersten Stelle, umfassend:
Befestigen einer Vielzahl von Ankern (214) an einer äußeren Oberfläche der Wand; und
Befestigen einer Vielzahl von Stäben (210) an der Vielzahl von Ankern, wobei die Vielzahl von Stäben durch die Wand verläuft, um einen speichenförmigen Rahmen innerhalb des inneren Volumens zu bilden, wobei jeder der Stäbe (210) an eine gemeinsame Mittelpunktnabe 216 gekoppelt ist, die innerhalb des inneren Volumens 212 angeordnet ist;
Befestigen mindestens einer zusätzlichen Verstärkungsstruktur an einer Oberfläche der Wand an einer anderen Stelle entlang der Höhe der Wand; und
Anordnen eines porösen Wärmespeichermediums innerhalb des inneren Volumens (212).

12. Verfahren nach Anspruch 11, wobei das Befestigen einer Verstärkungsstruktur an der Oberfläche der Wand Folgendes umfasst:
Befestigen einer Vielzahl von Ankern (518) an einer äußeren Oberfläche der Wand;
Anbringen einer Vielzahl von Stäben (510) an den Ankern an einem ersten Ende der Stäbe; und
Anbringen der Vielzahl von Stäben an einem Kranz (520) an einem zweiten Ende der Stäbe derart, dass die Vielzahl von Ankern, die Vielzahl von Stäben und der Kranz einen versteiften Rahmen um eine äußere Oberfläche der Wand herum bilden.

## Revendications

1. Système de stockage d'énergie thermique comprenant :
une cuve cylindrique sous pression (116) configurée pour résister à une première pression, la cuve sous pression ayant une paroi (202) comprenant :
une surface externe ; et
une surface interne entourant un volume interne (212) de la cuve sous pression, le volume interne ayant :
une première extrémité qui est à même de communiquer fluidiquement avec un ou plusieurs compresseurs et une ou plusieurs turbines ; et
une seconde extrémité qui est à même de communiquer fluidiquement avec au moins un composant de stockage d'air comprimé ;
un support de stockage thermique positionné dans le volume interne ; et
au moins une structure de renfort (206) fixée à la surface externe de la paroi et s'étendant dans le volume interne de la cuve sous pression ; la au moins une structure de renfort (206) étant configurée pour renforcer la paroi (202) afin de résister à une pression supérieure à la première pression ;
dans lequel la au moins une structure de renfort (206) comprend une pluralité de tiges d'acier (210) formant un châssis en forme de rayons dans le volume interne de la cuve sous pression, chacune des tiges (210) étant retenue par une ancre respective (214) sur une surface externe de la paroi (202), tandis que l'autre extrémité passe à travers la paroi (202) et est couplée sur un moyeu central commun (216) situé à l'intérieur du volume interne (212).

2. Système de stockage d'énergie thermique selon la revendication 1, dans lequel la au moins une structure de renfort comprend une pluralité de tiges d'acier (210) interconnectées pour former un châssis stabilisé autour de la surface externe de la paroi (202).

3. Système de stockage d'énergie thermique selon la revendication 2, comprenant en outre un rebord d'acier (520) disposé autour d'une circonférence externe du châssis stabilisé.

4. Système de stockage d'énergie thermique selon la revendication 1, dans lequel la au moins une structure de renfort comprend :
une pluralité de premières tiges (514) interconnectées entre une pluralité d'ancres montées sur la paroi et un rebord circonférentiel (520) pour former un châssis stabilisé autour de la surface externe de la paroi.

5. Système de stockage d'énergie thermique selon la revendication 1, dans lequel la au moins une structure de renfort comprend une pluralité de structures de renfort disposées sur une longueur de la cuve sous pression.

6. Système de stockage d'énergie thermique selon la revendication 1, dans lequel la paroi (202) de la cuve sous pression est formée de béton.

7. Système de stockage d'énergie thermique selon la revendication 1, dans lequel le support de stockage thermique est un support de stockage thermique poreux disposé dans le volume interne de la cuve sous pression.

8. Système de stockage d'énergie thermique selon la revendication 7, dans lequel le support de stockage thermique poreux comprend au moins l'un(e) parmi une pierre naturelle, une céramique, du béton, de la fonte de fer, un sel de nitrate ou une huile minérale.

9. Système de stockage d'énergie thermique selon la revendication 1, dans lequel la cuve sous pression (116) est de forme cylindrique.

10. Système de stockage d'énergie thermique selon la revendication 1, dans lequel :
la paroi (202) est une paroi cylindrique de béton délimitant le volume interne, dans lequel le volume interne est configuré pour permettre le passage d'air à travers celui-ci ;
la au moins une structure de renfort (206) est fixée à la surface externe de la paroi cylindrique de béton ; et
un matériau matriciel thermique poreux est disposé dans le volume interne de la paroi cylindrique de béton, dans lequel le matériau matriciel thermique poreux est configuré pour permettre le passage d'air à travers celui-ci.

11. Procédé de formation d'une cuve de stockage d'énergie thermique sous pression selon l'une quelconque des revendications précédentes, le procédé comprenant :
la formation d'une paroi (202) ayant une hauteur et une épaisseur prédéterminée, dans lequel une surface interne de la paroi délimite un volume interne (212) ;
la fixation d'une structure de renfort (206) s'étendant dans le volume interne à une surface de la paroi à un premier emplacement, comprenant :
la fixation d'une pluralité d'ancres (214) à une surface externe de la paroi ; et
la fixation d'une pluralité de tiges (210) à la pluralité d'ancres, la pluralité de tiges passant à travers la paroi pour former un châssis en forme de rayons dans le volume interne, chacune des tiges (210) étant couplée sur un moyeu central commun 216 situé dans le volume interne 212 ;
la fixation d'au moins une structure de renfort supplémentaire à une surface de la paroi à un autre emplacement sur la hauteur de la paroi ; et
la disposition d'un support de stockage thermique poreux dans le volume interne (212).

12. Procédé selon la revendication 11, dans lequel la fixation d'une structure de renfort à la surface de la paroi comprend :
la fixation d'une pluralité d'ancres (518) à une surface externe de la paroi ;
l'assemblage d'une pluralité de tiges (510) aux ancres à une première extrémité des tiges ; et
l'assemblage de la pluralité de tiges à un rebord (520) à une seconde extrémité des tiges de sorte que la pluralité d'ancres, la pluralité de tiges et le rebord forment un châssis stabilisé autour d'une surface externe de la paroi.
